# EUROPEAN PATENT SPECIFICATION

(11) **EP 3 379 360 B1**
(45) Date of publication and mention of the grant of the patent: **27.11.2019**
(21) Application number: 18159178.5
(22) Date of filing: 28.02.2018
(51) Int. Cl.: G05B 23/02, G01D 3/08

(54) **ANOMALY DETECTION SYSTEM AND ANOMALY DETECTION METHOD**
ANOMALIEDETEKTIONSSYSTEM UND ANOMALIEDETEKTIONSVERFAHREN
SYSTÈME ET PROCÉDÉ DE DÉTECTION D'ANOMALIES

(30) Priority: 23.03.2017 JP 2017056869
(43) Date of publication of application: 26.09.2018
(73) Proprietor: Hitachi, Ltd., Chiyoda-ku Tokyo 100-8280 (JP)
(72) Inventor: TAJIMA, Yoshiyuki, Chiyoda-ku, Tokyo 100-8280 (JP); MOCHIZUKI, Yoshinori, Chiyoda-ku, Tokyo 100-8280 (JP)
(74) Representative: Mewburn Ellis LLP

(56) References cited:
- US-A1- 2007 028 219
- US-A1- 2015 254 125

## Description

### BACKGROUND

The present invention relates to an anomaly detection system and an anomaly detection method.

Many systems including industrial systems in factories and the like and systems for social infrastructures such as railroads and electric power are each composed of a plurality of computers, controllers, devices, and facilities.

When stopping functioning, such a system will possibly have devastating economic and social impacts. It is therefore important to promptly locate and remedy a breakdown or a failure or to forecast it and take precautions beforehand, so that the system may not stop functioning.

Today, various types of operational data are available from the computers, controllers, devices, facilities, and the like. Therefore, methods have been used to form a statistical model representing a normal behavior of a device, a facility, a system, or the like and detect an anomaly or a sign thereof in the device, facility, system, or the like based on a deviation of the operational data from the model.

In a method often used particularly for a case where operational data keeps showing the same value, the mean and variance of the operational data under normal operation are calculated based on the assumption that the value in the operational data conforms to a normal distribution, a mixture normal distribution, or the like, and an anomaly is determined based on the probability density of newly-observed operational data on that probability distribution. This method, however, does not work effectively when the value of operational data fluctuates because of a transition period or the like.

Regarding such a situation, for example, there is proposed a method for monitoring the state of a facility based on sensor signals outputted from a sensor installed in the facility, the method comprising: extracting from the sensor signals input vectors as an input of a regression model and output vectors as an output of the regression model; selecting normal input vectors and output vectors from the extracted vectors and accumulating them as learning data; selecting from the accumulated learning data a predetermined number of learning data pieces close to an input vector in observation data formed by the input vector and an output vector extracted from the sensor signals; creating the regression model based on the selected learning data; calculating an anomaly level of the observation data based on the regression model and the input and output vectors of the observation data; performing anomaly determination to determine whether the state of the facility is anomalous or normal based on the calculated anomaly level; and updating the learning data based on a result of the anomaly determination of the state of the facility and a similarity between the input vector of the observation data and learning data closest to the input vector. See Japanese Patent Application Publication No. 2013-25367.

US 2007/0028219 proposes a method and system for anomaly detection. US 2015/0254125 proposes a method of detecting a warning sign indicating the occurrence of a system failure.

### SUMMARY

Conventional technology, however, do not take account of the possibility that even for operational data under normal operation, there may be a deviation (error) between a prediction result and an observation result due to insufficient representation capability of the model, an insufficient amount of operational data, and measurement noise.

For this reason, an anomaly level (an anomaly score), that is calculated from a deviation between a prediction result and an observation result, can increase even during normal operation. In many cases, a threshold for the anomaly score is set and used for determining an anomaly based on whether an anomaly score exceeds the threshold. However, since an anomaly score may increase even during normal operation as described above, determination of the threshold is difficult. Therefore, in some cases, it may be that the increase in an anomaly score brings on false information. In particular, if an anomaly or a sign thereof is to be detected in target devices, facilities, or the like, there are so many targets to monitor that an operator will be placed under a non-negligible load.

The present invention has been made in consideration of the above and aims to set a threshold for anomaly detection easily and accurately.

To solve the above problems, an anomaly detection system of a first aspect of the invention is provided by claim 1.

Further, an anomaly detection method of a second aspect of the invention is provided by claim 11.

The present invention can set a threshold for anomaly detection easily and accurately.

### BRIEF DESCRIPTION OF THE DRAWINGS

Fig. 1 is a diagram illustrating a system configuration and a functional configuration according to a first embodiment.
Fig. 2 is a diagram illustrating a hardware configuration according to the first embodiment.
Fig. 3 is a diagram illustrating operational data according to the first embodiment.
Fig. 4 is a diagram illustrating model input/output definition data according to the first embodiment.
Fig. 5 is a diagram illustrating model parameters according to the first embodiment.
Fig. 6 is a diagram illustrating anomaly detection result data according to the first embodiment.
Fig. 7 is a diagram illustrating a processing procedure of model learning according to the first embodiment.
Fig. 8 is a diagram illustrating a processing procedure of anomaly detection according to the first embodiment.
Fig. 9 is a diagram illustrating an example configuration of a point predictive model according to the first embodiment.
Fig. 10 is a diagram illustrating an example configuration of a distribution predictive model according to the first embodiment.
Fig. 11 is a diagram illustrating an example configuration of an exception pattern according to the first embodiment.
Fig. 12 is a diagram illustrating a monitor display according to the first embodiment.
Fig. 13 is a diagram illustrating an example of learning of an error reconstruction model according to a second embodiment.
Fig. 14 is a diagram illustrating model data according to the second embodiment.
Fig. 15 is a diagram illustrating detection result data according to the second embodiment.
Fig. 16 is a diagram illustrating a processing procedure of a learning phase according to the second embodiment.
Fig. 17 is a diagram illustrating a processing procedure of a monitoring phase according to the second embodiment.
Fig. 18 is a diagram illustrating a monitor display according to the second embodiment.

### DETAILED DESCRIPTION OF THE EMBODIMENTS

### First Embodiment

### (Outline)

First descriptions relate to an outline of an anomaly detection system and an anomaly detection method according to the present embodiment. Note that the anomaly detection system of the present embodiment is to promptly and accurately locate and forecast a breakdown or a failure, or a sign thereof, in a monitoring target system (such as an industrial system in a factory or the like or a system for social infrastructures such as railroads or electric power) to prevent the monitoring target system from having a stopped function.

Processing performed by the anomaly detection system of the present embodiment is divided into a learning phase and a monitoring phase. In the learning phase, the anomaly detection system learns a predictive model based on operational data obtained in the above-described monitored system under normal operation (hereinafter referred to as normal operational data). In the monitoring phase, the anomaly detection system calculates an anomaly score based on a deviation of operational data observed during monitoring from a prediction result obtained by the predictive model, informs a user (such as a monitor), and displays related information.

In the learning phase of these phases, the anomaly detection system learns a predictive model that predicts a time-series behavior of a monitored system based on operational data collected from each device and facility in the monitored system.

Use of such a predictive model enables calculation of predicted values on the behavior of the monitored system in a period from the present to a predetermined point in the future. This prediction period is referred to as a window size herein. Detailed descriptions of methods for working out predicted values will be given in later paragraphs.

The anomaly detection system also learns a window size estimation model that calculates a window size at a certain time point using the above-described predictive model and operational data acquired from the monitored system. An anomaly score is calculated based on the cumulative error and likelihood between a predicted value sequence and an observed value sequence within a window size. Therefore, the larger the window size, the larger the anomaly score at a given time point. The window size estimation model learns the relation between operational data and a window size to output a larger window size for high prediction capability and a smaller window size for low prediction capability so that anomaly scores may stay approximately the same for normal operational data.

In the monitoring phase, the anomaly detection system calculates a window size based on the window size estimation model and operational data acquired from the monitored system during monitoring. Further, the anomaly detection system calculates a predicted value sequence using the predictive model and calculates an anomaly score based on the predicted value sequence and an observed value sequence. When this anomaly score exceeds a predetermined threshold, the anomaly detection system determines that there is an anomaly or a sign of an anomaly in the monitored system, and outputs anomaly information to an operator who is a monitor via a predetermined terminal or the like.

### (System Configuration)

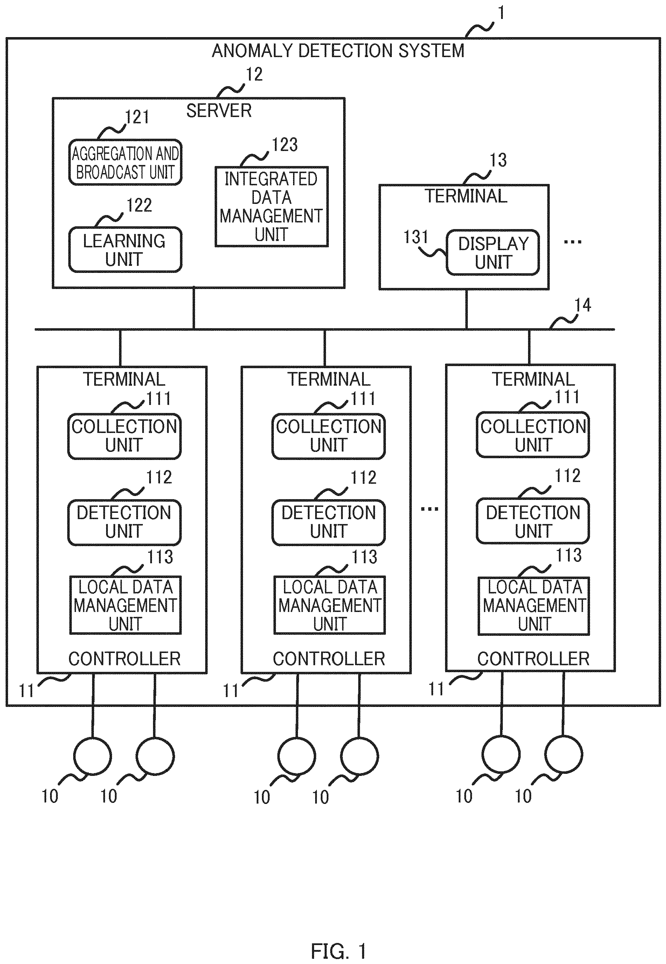

As shown by Fig. 1, a next description relates to the configuration of an anomaly detection system 1 according to the present embodiment. The anomaly detection system 1 of the present embodiment is assumed to include facilities 10 (monitored systems) having sensors and actuators, controllers 11 that control the facilities 10, a server 12 that performs learning of the above-described predictive model and management of data, a terminal 13 that presents information indicating an anomaly or a sign thereof to an operator.

These components of the anomaly detection system 1 are coupled to one another by a network 14 such as a local area network (LAN). Although the present embodiment assumes that the components are coupled by a LAN, they may be coupled over the World Wide Web (WWW) instead. Moreover, the components of the anomaly detection system 1 described above are merely an example, and may be increased or decreased in number, coupled to a single network, or coupled under hierarchical classification. Although the present embodiment describes a case where the facilities 10 are the monitored systems, the controller 11 or other computers may be monitored as well.

### (Functions and hardware)

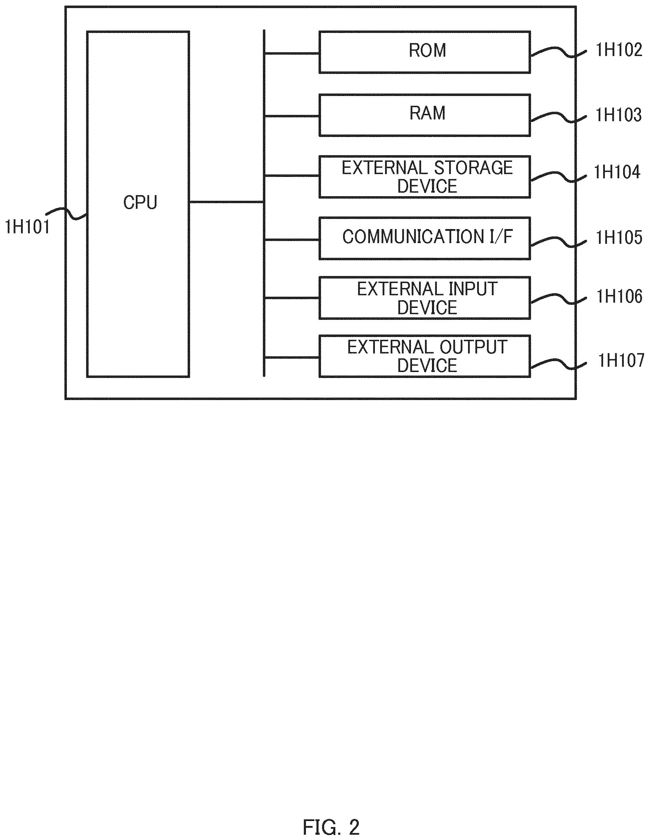

As shown by Figs. 1 and 2, next descriptions relate to correspondences between the functions and hardware elements of the anomaly detection system. According to the present embodiment, the arithmetic device for the anomaly detection system is comprised of the controller 11, the server 12, and the terminal 13. The controller 11 of the anomaly detection system 1 of the present embodiment includes the following functional units: a collection unit 111, a detection unit 112, and a local data management unit 113. These functional units are implemented when a central processing unit (CPU) 1H101 loads a program stored in a read-only memory (ROM) 1H102 or an external storage device 1H104 into a read-access memory (RAM) 1H103 and executes the program to control a communication interface (IF) 1H105, an external input device 1H106 such as a mouse and a keyboard, and an external output device 1H107 such as a display.

Further, the server 12 of the anomaly detection system 1 according to the present embodiment includes the following functional units: an aggregation and broadcast unit 121, a learning unit 122, and an integrated data management unit 123. These functional units are implemented when a central processing unit (CPU) 1H101 loads a program stored in a read-only memory (ROM) 1H102 or an external storage device 1H104 into a read-access memory (RAM) 1H103 and executes the program to control a communication interface (IF) 1H105, an external input device 1H106 such as a mouse and a keyboard, and an external output device 1H107 such as a display.

Further, the terminal 13 of the anomaly detection system 1 according to the present embodiment includes a display unit 131. This display unit 131 is implemented when a central processing unit (CPU) 1H101 loads a program stored in a read-only memory (ROM) 1H102 or an external storage device 1H104 into a read-access memory (RAM) 1H103 and executes the program to control a communication interface (IF) 1H105, an external input device 1H106 such as a mouse and a keyboard, and an external output device 1H107 such as a display.

### (Data structures)

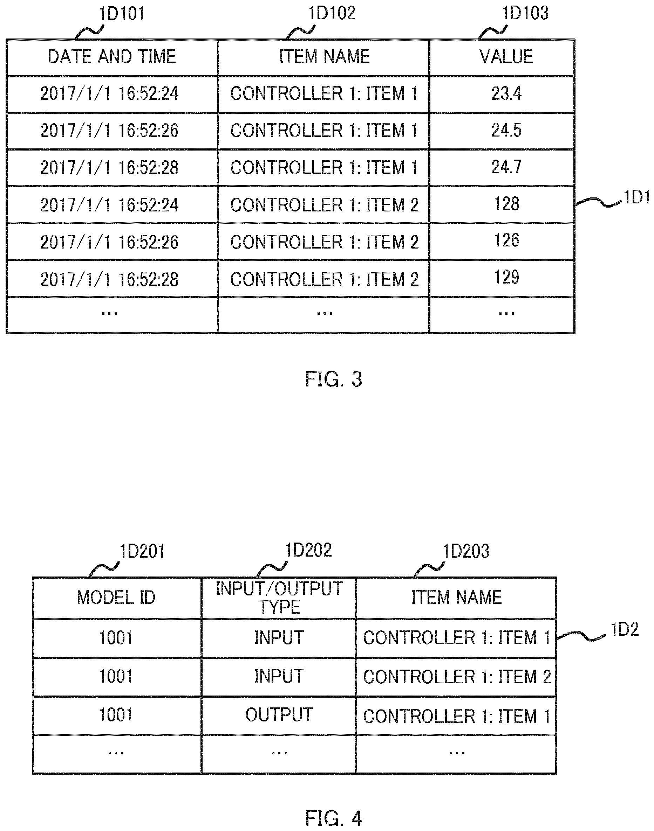

As shown by Fig. 3, a next description relates to operational data 1D1 collected by each controller 11 from each facility 10 or the controller 11 itself and managed by the local data management unit 113.

The operational data 1D1 in the present embodiment is a measurement value from a sensor attached in the facility 10 or a control signal sent to the facility 10, and includes date and time 1D101, item name 1D102, and value 1D103.

Of these, the time and date 1D101 indicates the data and time of occurrence or collection of the corresponding operational data. The item name 1D102 is a name for identifying the corresponding operational data, and is for example a sensor number or a control signal number. The value 1D103 indicates a value of the operational data at the corresponding time and date and the corresponding item.

The operational data 1D1 managed by the integrated data management unit 123 of the server 12 has the same data structure, but is integration of all the sets of the operational data 1D1 in the local data management units 113 of the controllers 11.

As shown by Fig. 4, a next description relates to an input/output definition data 1D2 managed by the local data management unit 113 of each controller 11 and by the integrated data management unit 123 of the server 12.

The input/output definition data 1D2 of the present embodiment is data defining an input and an output of a predictive model, and includes model ID 1D201, input/output type 1D202, and item name 1D203.

Of these, the model ID 1D201 is an ID for identifying a predictive model. The input/output type 1D202 is data specifying whether the specified item is an input or an output of the predictive model. The item name 1D203 is the name of the corresponding item that is either an input or an output of the predictive model.

For instance, Fig. 4 exemplifies sets of the input/output definition data 1D2 for the predictive model under the model ID "1001", with two of them being an input ("controller 1: item 1" and "controller 1: item 2") and one of them being an output (controller 1: item 1). Although this example illustrates a predictive model with two inputs and one output, a predictive model may be set to have any appropriate number of inputs and outputs, such as one input and one output or three inputs and two outputs.

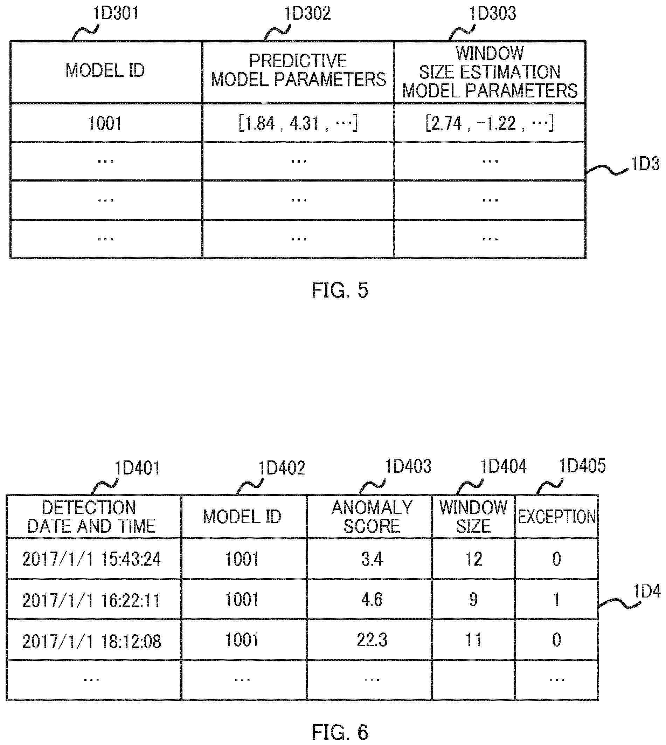

As shown by Fig. 5, a next description relates to model data 1D3 managed by the local data management unit 113 of each controller 11 and by the integrated data management unit 123 of the server 12.

The model data 1D3 of the present embodiment includes a model ID 1D301, predictive model parameters 1D302, and window size estimation model parameters 1D303.

Of these, the model ID 1D301 is an ID for identifying a predictive model. The predictive model parameters 1D302 indicate parameters of the predictive model that predicts the time-series behavior of the monitored facility 10. The window size estimation model parameters 1D303 indicate parameters of a window size estimation model that dynamically changes the window size for calculation of an anomaly score so that anomaly scores of normal operation data may stay approximately the same. When a predictive model constitutes a neural network, these two sets of parameters correspond to, for example, values in weighting matrixes in the neural network.

As shown by Fig. 6, a next description relates to detection result data 1D4 managed by the local data management unit 113 of each controller 11.

The detection result data 1D4 of the present embodiment includes a detection date and time 1D401, a model ID 1D402, an anomaly score 1D403, a window size 1D404, and an exception 1D405.

Of these, the detection date and time 1D401 indicates the date and time of detection of an anomaly or a sign thereof. The model ID 1D402 is an ID for identifying the predictive model used for the detection. The anomaly score 1D403 is the calculated anomaly score. The window size 1D404 indicates the window size used for the calculation of the anomaly score. The exception 1D405 indicates whether there is a match with an exception pattern to be described, and is "1" if there is a match and "0" if not.

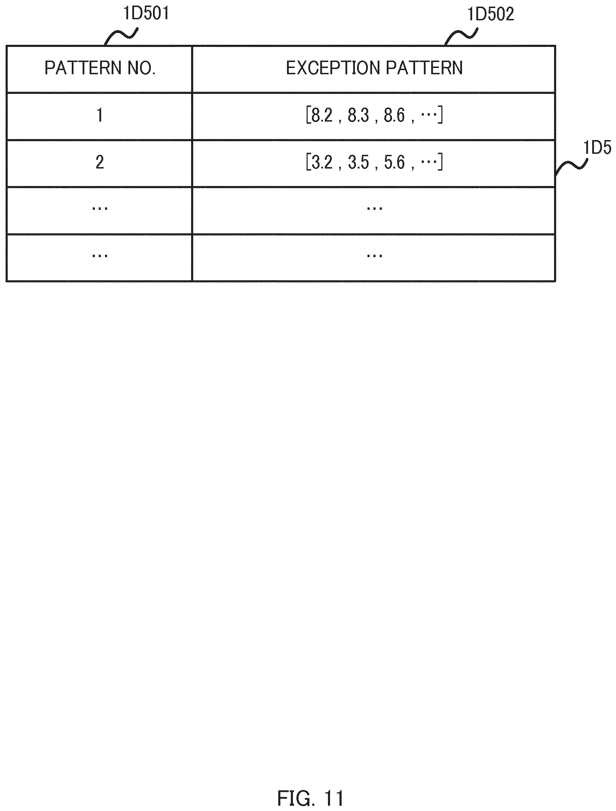

As shown by Fig. 11, a next description relates to an exception pattern 1D5 managed by the local data management unit 113 of each controller 11 and the integrated data management unit 123 of the server 12. The exception pattern 1D5 of the present embodiment includes a pattern No. 1D501 and an exception pattern 1D502.

Of these, the pattern No. 1D501 is an ID identifying an exception pattern. The exception pattern 1D502 indicates a partial sequence pattern in operational data that, even if the anomaly detection system 1 detects an anomaly, causes notification to the terminal 13 to be omitted exceptionally.

### (Processing procedure)

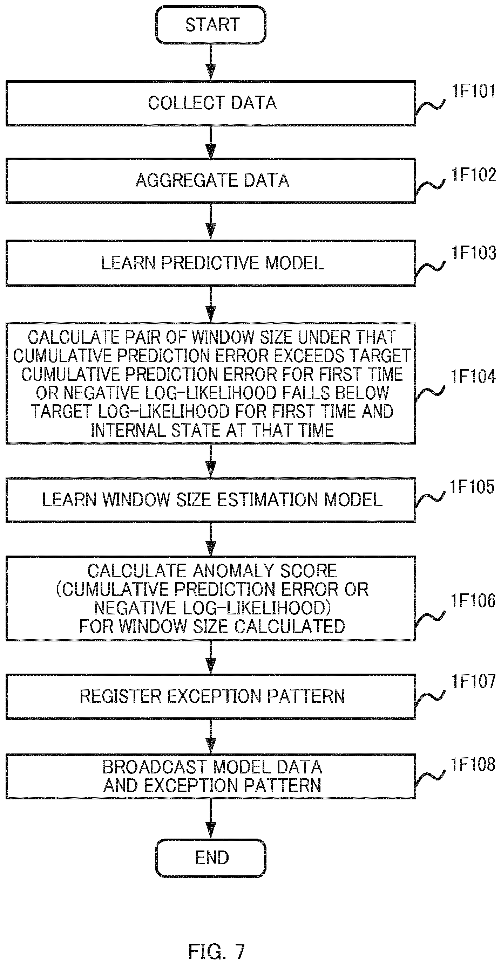

As shown by Figs. 7, 9, and 10, a next description relates to a processing procedure of the learning phase of the anomaly detection system 1 according to the present embodiment. It is assumed below that appropriate sets of the input/output definition data 1D2 are registered prior to this processing.

First, the collection unit 111 of each controller 11 collects sets of operational data 1D1 from the facilities 10 or the controller 11 and stores the operational data 1D1 in the local data management unit 113 (Step 1F101) . Note that the intervals of the sets of the operation data collected by the collection unit 111 are regular in the present embodiment. If the intervals of the sets of operational data are not regular, the collection unit 111 converts the operational data sets into interval-adjusted operational data sets using interpolation or the like, and then stores the converted operational data sets in the local data management unit 113.

Next, the aggregation and broadcast unit 121 of the server 12 aggregates the operational data 1D1 stored in the local data management unit 113 of each controller 11, and stores the operational data 1D1 in the integrated data management unit 123 of the server 12 (Step 1F102).

Next, using the normal operational data 1D1 stored in the integrated data management unit 123, the learning unit 122 of the server 12 learns a predictive model with an input and an output defined in the input/output definition data 1D2, and then stores the predictive model in the integrated data management unit 123 as the model data 1D3 (the predictive model parameters 1D302) (Step 1F103).

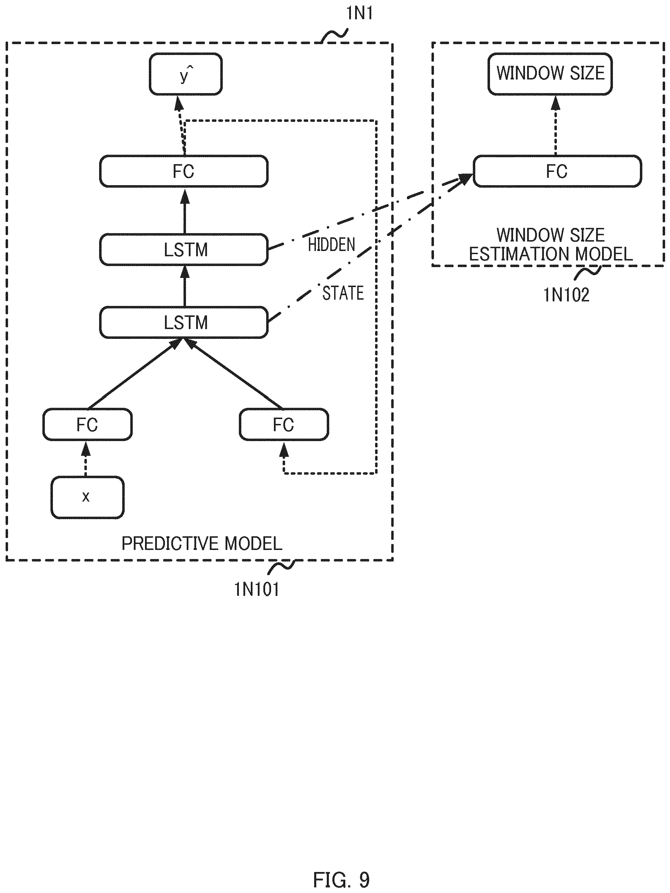

At this point, the cell for the window size estimation model parameters 1D303 is empty (a null). The predictive model is able to constitute an encoder-decoder recurrent neural network using long short-term memory (LSTM), like a predictive model 1N101 illustrated in Fig. 9.

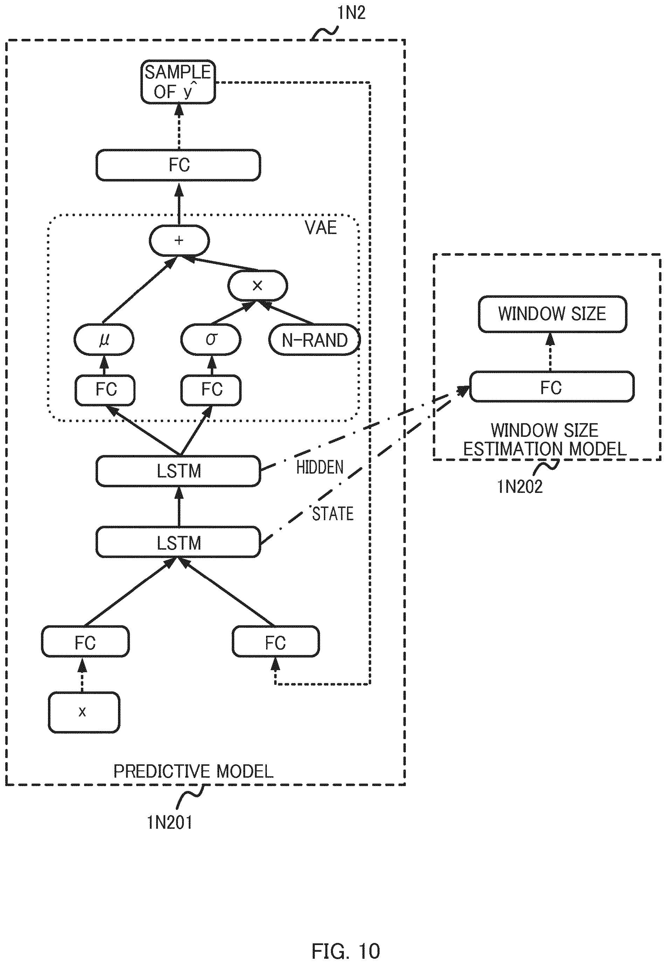

Specifically, regarding the predictive model under the model ID "1001" in the input/output definition data 1D2 of Fig. 4, in the models exemplified in Figs. 9 and 10, the input of the recurrent neural network (x in Figs. 9 and 10) is "controller 1: item 1" and "controller 1: item 2" and the output thereof (y^ in Figs. 9 and 10) is "controller 1: item 1". Note that information indicative of a terminal end may be added to the "x" above.

Use of the encoder-decoder recurrent neural network enables construction of a predictive model that performs structured prediction of a sequence of any length for that an input and an output are different from each other.

Note that "FC" in Fig. 9 denotes for a full connected layer. In such a configuration, the output is a determinate value, and therefore an anomaly score is based on cumulative prediction error. Cumulative prediction error is an absolute value of the difference between a predicted value sequence and an observed value sequence at each time point.

Alternatively, the predictive model may be constructed that can obtain a sample of an output using a generative model such as a variational autoencoder (VAE), like a predictive model 1N2 in Fig. 10. In Fig. 10, "µ" denotes a mean, "σ" denotes a variance, "N-Rand" denotes a normal random number, "×" denotes the product of elements in a matrix, and "+" denotes the sum of matrices.

The predictive model 1N2 in Fig. 10 requires more calculations than the predictive model 1N1 in Fig. 9, but can output not only an expected value (i.e., a mean), but also a degree of dispersion (i.e., a variance), and can calculate not only an anomaly score based on cumulative prediction error, but also an anomaly score based on likelihood.

The likelihood is an occurrence probability of an observed value sequence, and is obtained by calculating the mean and variance at each point through multiple times of sampling, calculating a probability density under the mean and variance of the observed values based on the idea that the observed value at each point conforms to an independent normal distribution, and calculating the product of all the probability densities. For operational data whose degree of dispersion changes over time, an abnormal score varies less when the anomaly score is based on likelihood than when the anomaly score is based on cumulative prediction error.

Next, using the predictive model and the normal operational data 1D1 stored in the integrated data management unit 123, the learning unit 122 of the server 12 calculates, for each point, a pair of: a window size under that the cumulative prediction error exceeds a target cumulative prediction error for the first time or the likelihood falls below a target likelihood for the first time; and an internal state of the recurrent neural network at that time (Step 1F104).

It is assumed here that the target cumulative prediction error is half the average of the cumulative prediction errors for a window size of 30. As for the likelihood, a log-likelihood obtained by logarithmic transformation is more convenient to work with from a calculation viewpoint. The log-likelihood is a value smaller than or equal to 0. Therefore, the likelihood is a negative log-likelihood here, and the target log-likelihood is half the average of negative log-likelihoods for a window size of 30.

Although in the present embodiment the target cumulative prediction error and the target log-likelihood are respectively half the average of cumulative prediction errors and half the average of negative log-likelihoods for a window size of 30, the window size may be changed according to operational data, or the target cumulative prediction error or log-likelihood may be calculated by a different method.

Next, using the pairs of the window size and the internal state calculated above, the learning unit 122 of the server 12 learns a window size estimation model and adds results to the window size estimation model parameters 1D303 of the model data 1D3 of the corresponding predictive model (Step 1F105).

The window size estimation model is a predictor to that an internal state is inputted and from that a window size is outputted, and specifically, is learnt using a linear regression model, as shown with 1N102 in Fig. 9 and 1N202 in Fig. 10. Although the present embodiment uses a linear regression model, other models such as a multilayer neural network may be used instead.

Next, using the predictive model, the window size estimation model, and the normal operational data 1D1 stored in the integrated data management unit 123, the learning unit 122 of the server 12 calculates an anomaly score for each set of the normal operational data 1D1, i.e., a cumulative prediction error or a negative log-likelihood using the estimated window size (Step 1F106).

Next, in the integrated data management unit 123, the learning unit 122 of the server 12 stores a partial sequence of operational data over a window size of 30 before and after the anomaly score exceeding a threshold η (i.e., a total of 61 points) as the exception pattern 1D5 (Step 1F107). The threshold η is twice the target cumulative prediction error or the target log-likelihood here, but may be set to a different value.

Lastly, the aggregation and broadcast unit 121 of the server 12 distributes the model data 1D3 and the exception pattern 1D5 to the controllers 11 (Step 1F108), and the processing ends.

Although the predictive model in the present embodiment calculates a predicted value sequence of operational data from the present to the future using operational data from the past to the present, the predictive model may be designed to calculate (or restore) a predicted value sequence of operational data from the present to the past using the operational data from the past to the present, or may be built to do both.

In addition, although the present embodiment uses a predictive model that takes operation data directly as its input or output, operational data to that a low-pass filter has been applied or data such as a difference between operational data sets may be used as the input and output.

Further, although the present embodiment learns the predictive model and the window size estimation model separately, they may be integrated. Specifically, when learning is done by inverse error propagation or the like, an error signal in the window size estimation model may be propagated to the intermediate layer of the predictive model. This enables learning that takes both prediction accuracy and predictability into account.

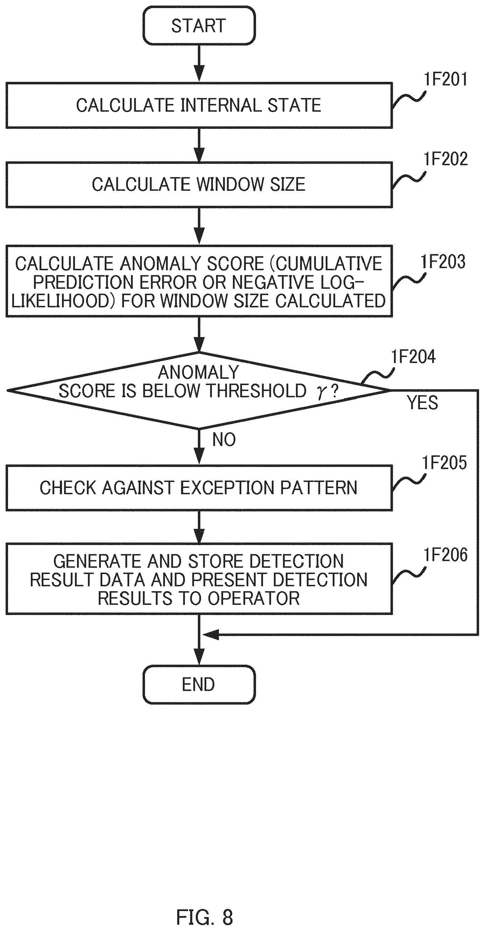

As shown by Fig. 8, a next description relates to a processing procedure of the monitoring phase at a given time point t according to the present embodiment. Note that operational data before and after the time point t have already been collected prior to this processing.

First, to the above-described encoder-decoder recurrent neural network, the detection unit 112 of the controller 11 consecutively inputs operational data 1D1 approximately several tens to hundreds of time units before the time point t to update the internal state of the recurrent neural network (Step 1F201). The present embodiment uses operational data 1D1 50 time units before the time point t.

Next, the detection unit 112 of the controller 11 calculates a window size for the time point t using the internal state of the recurrent neural network and the window size estimation model (Step 1F202).

Next, the detection unit 112 of the controller 11 repeats predictions within the calculated window size, and calculates an anomaly score, or specifically, a cumulative prediction error or a negative log-likelihood (Step 1F203). In this step, with the window size reflecting prediction capability, anomaly scores of normal operational data are adjusted to stay approximately the same.

Next, the detection unit 112 of the controller 11 checks whether the anomaly score is below a threshold γ (Step 1F204).

If it is determined as a result of the check that the anomaly score is below the threshold γ (Step 1F204: yes), the detection unit 112 of the controller 11 determines that there is no anomaly and ends the processing at this point. If, on the other hand, the anomaly score is not below the threshold γ (Step 1F204: no), the detection unit 112 of the controller 11 determines that an anomaly or a sign thereof is detected, and proceeds to Step 1F206. The threshold γ is twice the target cumulative prediction error or the target log-likelihood here, but may be set to another value.

Next, the detection unit 112 of the controller 11 finds the sum of squares of the differences between the exception pattern 1D5 and the operational data from a time point t-30 to a time point t+30, and when the result is below a threshold θ, determines that the operational data matches the exception pattern (Step 1F205).

Lastly, the detection unit 112 of the controller 11 generates the detection result data 1D4 and stores the detection result data 1D4 in the local data management unit 113, and if the detected result does not match the exception pattern, notifies the display unit 131 of the terminal 13. In response, the display unit 131 of the terminal 13 reads the detection result data 1D4 from the local data management unit 113 of the corresponding controller 11, and presents detection results to the operator (Step 1F206).

For simple illustration, the present embodiment describes a mode where the controller 11 updates the internal state of the recurrent neural network by inputting thereto the operational data 1D1 50 time units back from the time point t every time. In an actual practice, however, the update of the internal state and the calculation of an anomaly score can be efficiently done by taking a procedure of inputting every newly observed operational data into the recurrent neural network, saves the internal state immediately before performing prediction, calculating an anomaly score, and restoring the internal state (since the anomaly score calculation changes the internal state).

### (User interface)

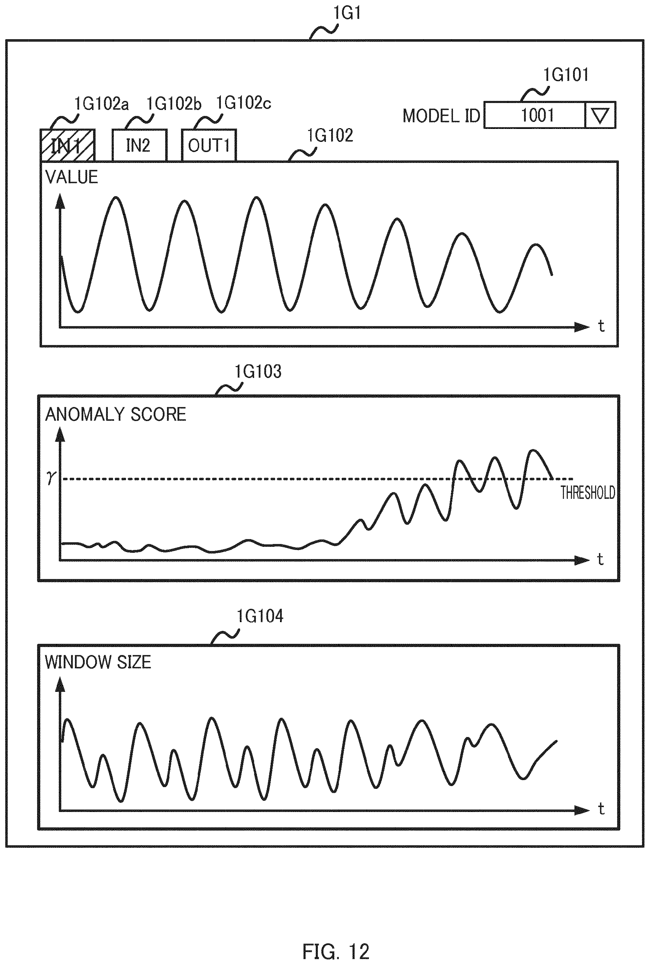

As shown by Fig. 12, a next description relates to a monitoring display 1G1 that the display unit 131 of the terminal 13 presents to the operator. The monitoring display 1G1 includes a model selection combo box 1G101, an operational data display pane 1G102, an anomaly score display pane 1G103, and a window size display pane 1G104.

Of these, displayed in the model selection combo box 1G101 is a model ID selected from selectable model IDs corresponding to the model IDs 1D402 of the detection result data 1D4. Information on detection results for the model ID that the operator operating the terminal 13 selects in this model selection combo box 1G101 are displayed in the operational data display pane 1G102, the anomaly score display pane 1G103, and the window size display pane 1G104.

Further, displayed in the operational data display pane 1G102 are operational data for the inputs and output of the predictive model under the model ID selected in the model selection combo box 1G101. In the example illustrated in Fig. 12, the horizontal axis represents time, and the vertical axis represents a value. Selection of the input and output of the predictive model is done using tabs (1G102a, 1G102b, 1G102c).

Further, in the anomaly score display pane 1G103, the anomaly score calculated by the predictive model under the model ID selected in the model selection combo box 1G101 is displayed along with the threshold γ. In the example illustrated in Fig. 12, the horizontal axis represents time, and the vertical axis represents a value. An anomaly score that exceeds the threshold and does not match the exception pattern is highlighted. The operator can know whether there is an anomaly or a sign thereof by looking at the information displayed in this anomaly score display pane 1G103.

Further, displayed in the window size display pane 1G104 is the window size calculated by the window size estimation model under the model ID selected in the model selection combo box 1G101. In the example illustrated in Fig. 12, the horizontal axis represents time, and the vertical axis represents a window size. By looking at the information displayed in this window size display pane 1G104, the operator can also gain information that they could not know if they had only an anomaly score, such as whether the situation for which notification of anomaly of a sign thereof is being made is typical or easily predictable by the predictive model.

### Second Embodiment

### (Outline)

A next description relates to another embodiment. Note that the description omits some points that are common to the first and second embodiments.

An anomaly detection system of the present embodiment also promptly and accurately locates and forecasts a breakdown or a failure, or a sign thereof, in a monitored system (such as an industrial system in a factory or the like or a system for social infrastructures such as railroads or electric power) to prevent the monitored system from stopping functioning. Being the same as those of the first embodiment, the configuration, functions, and the like of the anomaly detection system according to the present embodiment are not described below.

Processing performed by the anomaly detection system of the present embodiment is divided into a learning phase and a monitoring phase. In the learning phase, the anomaly detection system learns a predictive model based on normal operational data from the above-described monitored system. In the monitoring phase, the anomaly detection system calculates an anomaly score based on a deviation of operational data observed during monitoring from a prediction result obtained by the predictive model, informs a user (such as a monitor), and displays related information.

In the learning phase of these phases, the anomaly detection system learns a predictive model that predicts a time-series behavior of a monitored system based on operational data collected from each device and facility in the monitored system. The anomaly detection system also learns, using operational data and the predictive model, an error reconstruction model that reconstructs a prediction error sequence within a predetermined window size.

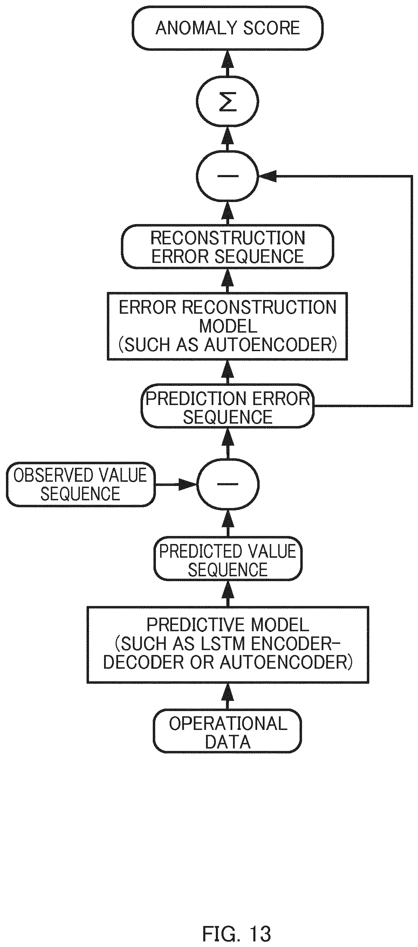

Further, the anomaly detection system performs processing for the monitoring phase by following the procedure illustrated in Fig. 13. In this processing, the anomaly detection system calculates a predicted value sequence within a predetermined window size based on operational data obtained during monitoring and the predictive model. Further, as an anomaly score, a reconstruction error sequence of the predicted error sequence is calculated on an error reconstruction model and a prediction error sequence obtained from the predicted value sequence and an observed value sequence by the anomaly detection system. When the anomaly score exceeds a predetermined threshold, the anomaly detection system determines that there is an anomaly or a sign of an anomaly and presents anomaly information to the operator.

### (Data structures)

The operational data 1D1, that is collected by each controller 11 of the anomaly detection system 1 from the facilities 10 or the controller 11 itself and managed by the local data management unit 113 has the same structure as that in the first embodiment. Also, the input/output definition data 1D2 managed by the local data management unit 113 of each controller 11 and by the integrated data management unit 123 of the server 12 has the same structure as that in the first embodiment.

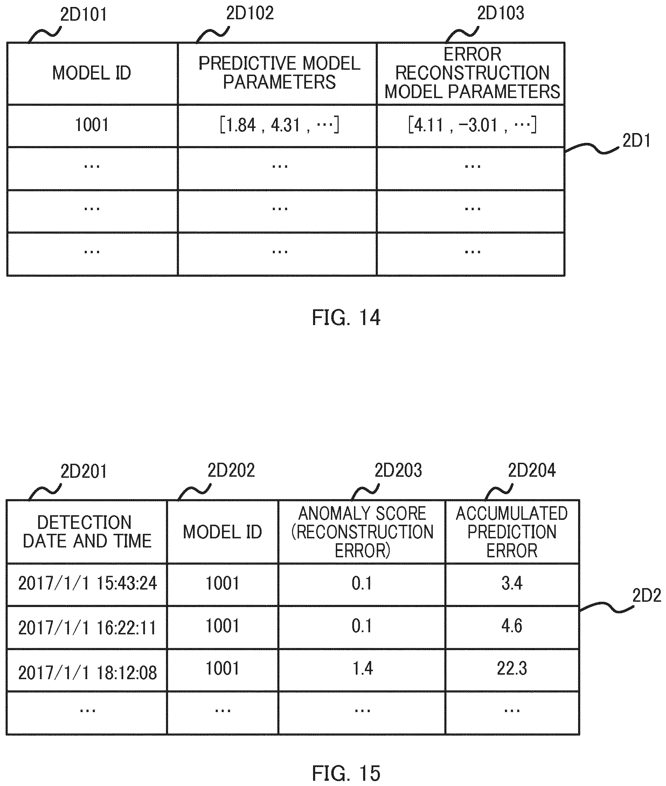

On the other hand, model data 2D1 managed by the local data management unit 113 of each controller 11 and by the integrated data management unit 123 of the server 12 has a structure different from that in the first embodiment. Fig. 14 illustrates an example of the model data 2D1 of the present embodiment.

The model data 2D1 includes model ID 2D101, predictive model parameters 2D102, and parameters 2D103 of an error reconstruction model that reconstructs prediction errors. Of these, the error reconstruction model parameters 2D103, when an autoencoder is used, correspond to weighting matrices between the input layer and the intermediate layer and between the intermediate layer and the output layer, as will be described later.

As shown by Fig. 15, a next description relates to detection result data 2D2 managed by the local data management unit 113 of each controller 11.

The detection result data 2D2 includes detection time and date 2D201, model ID 2D202, anomaly score 2D203, and an accumulated prediction error 2D204. Of these, the accumulated prediction error 2D204 is the sum of absolute values of the differences between the predicted value sequence outputted from the predictive model and the observed value sequence.

### (Processing procedure)

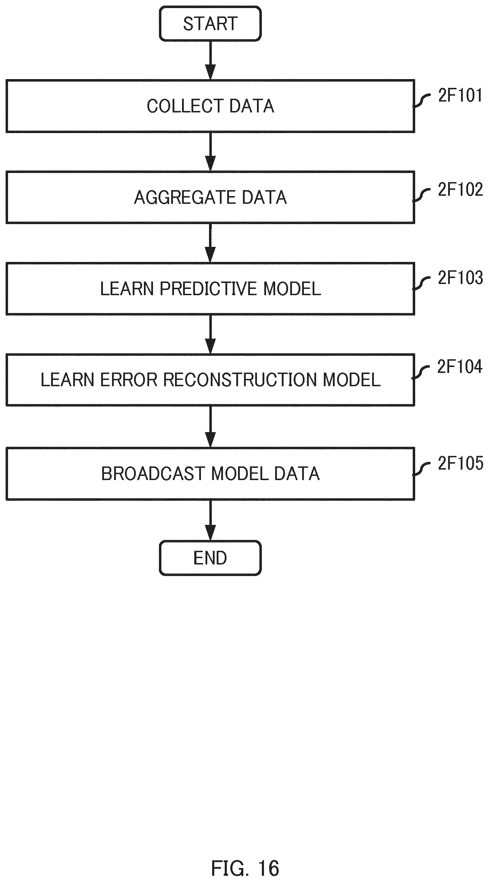

As shown by Fig. 16, a next description relates to processing performed by the anomaly detection system 1 of the present embodiment in the learning phase. It is assumed below that appropriate sets of the input/output definition data 1D2 are registered prior to this processing.

First, the collection unit 111 of each controller 11 collects sets of operational data 1D1 from the facilities 10 or the controller 11 and stores the operational data 1D1 in the local data management unit 113 (Step 2F101) . Note that the intervals of the sets of the operation data collected by the collection unit 111 are regular in the present embodiment. If the intervals of the sets of operational data are not regular, the collection unit 111 converts the operational data sets into interval-adjusted operational data sets using interpolation or the like, and then performs the storing.

Next, the aggregation and broadcast unit 121 of the server 12 aggregates the operational data 1D1 stored in the local data management unit 113 of each controller 11, and stores the operational data 1D1 in the integrated data management unit 123 of the server 12 (Step 2F102).

Next, using the normal operational data 1D1 stored in the integrated data management unit 123, the learning unit 122 of the server 12 learns a predictive model with an input and an output defined in the input/output definition data 1D2, and then stores the predictive model in the integrated data management unit 123 as the model data 1D3 (the predictive model parameters 1D302) (Step 2F103).

Although it is assumed that the above predictive model uses an encoder-decoder recurrent neural network described in the first embodiment, a fixed-length predictive model may be used because unlike the first embodiment the window size is not changed to adjust anomaly scores.

For example, a simpler autoencoder may be used to predict (reconstruct) data in the same section, or another statistical model such as an autoregressive model may be used.

Note that the temporal prediction direction of the predictive model may be not only from the past to the future, but also from the future to the past, or both.

Next, the learning unit 122 of the server 12 uses the above-described predictive model to calculate a predicted value sequence for the normal operational data 1D1 and calculate a prediction error sequence by comparing the predicted value sequence with the normal operational data 1D1. Here, the length of the predicted value sequence is based on a predetermined window size, which is "30" in the present embodiment as an example, but may be another value. Further, the error is an absolute value of a difference here, but may be another value. Then, the learning unit 122 of the server 12 learns an error reconstruction model that reconstructs a prediction error sequence (2F104).

For the error reconstruction model, the present embodiment uses a denoising autoencoder, which is a type of an autoencoder. This enables robust restoration even if somewhat deviating data are obtained during monitoring. Alternatively, principal component analysis (PCA) or other methods such as matrix decomposition may be used for the error reconstruction model.

Finally, the aggregation and broadcast unit 121 of the server 12 broadcasts the model data 1D3 and the exception pattern 1D5 to the controllers 11 (Step 2F105), and the processing ends.

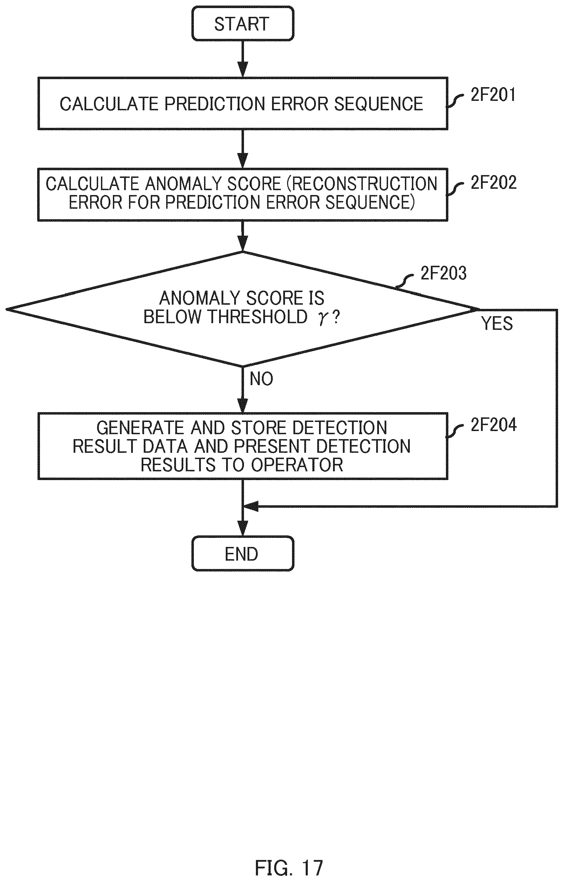

As shown by Fig. 17, a next description relates to a processing procedure of the monitoring phase at a given time point t according to the present embodiment. Note that operational data before and after the time point t are collected prior to the processing.

First, to the encoder-decoder recurrent neural network, the detection unit 112 of the controller 11 consecutively inputs the operational data 1D1 approximately several tens to several hundreds of time units before the time point t to update the internal state of the recurrent neural network. Further, the detection unit 112 calculates a prediction error sequence by calculating a predicted value sequence within a window size (30) from the time point t and computing the absolute values of the differences between the predicted value sequence and the operational data 1D1 (Step 2F201).

Next, the detection unit 112 uses an error reconstruction model to reconstruct the prediction error sequence obtained above and calculates an anomaly score based on the sum of the absolute values of the differences (reconstruction errors) between the reconstruction error sequence and the prediction error sequence before the reconstruction (Step 2F202).

Next, the detection unit 112 of the controller 11 checks whether the anomaly score is below the threshold γ. If it is determined as a result of the above check that the anomaly score is below the threshold γ (Step 2F203: yes), the detection unit 112 determines that there is no anomaly and ends the processing at this point.

On the other hand, if it is determined as a result of the above check that the anomaly score is not below the threshold γ (Step 2F203: no), the detection unit 112 determines that an anomaly or a sign thereof is detected and proceeds to Step 2F204 (Step 1F203).

Here, the threshold γ is set to µ+2σ where µ and σ are respectively the mean and standard deviation of anomaly scores of normal operational data, but may be set to another value.

Finally, the detection unit 112 of the controller 11 generates detection result data 1D4 and stores the detection result data 1D4 in the local data management unit 113. Further, the display unit 131 of the terminal 13 reads the detection result data 1D4 from the local data management unit 113 of the corresponding controller 11, and presents detection results to the operator by, for example, outputting the result to the terminal 13 (Step 1F204).

### (User interface)

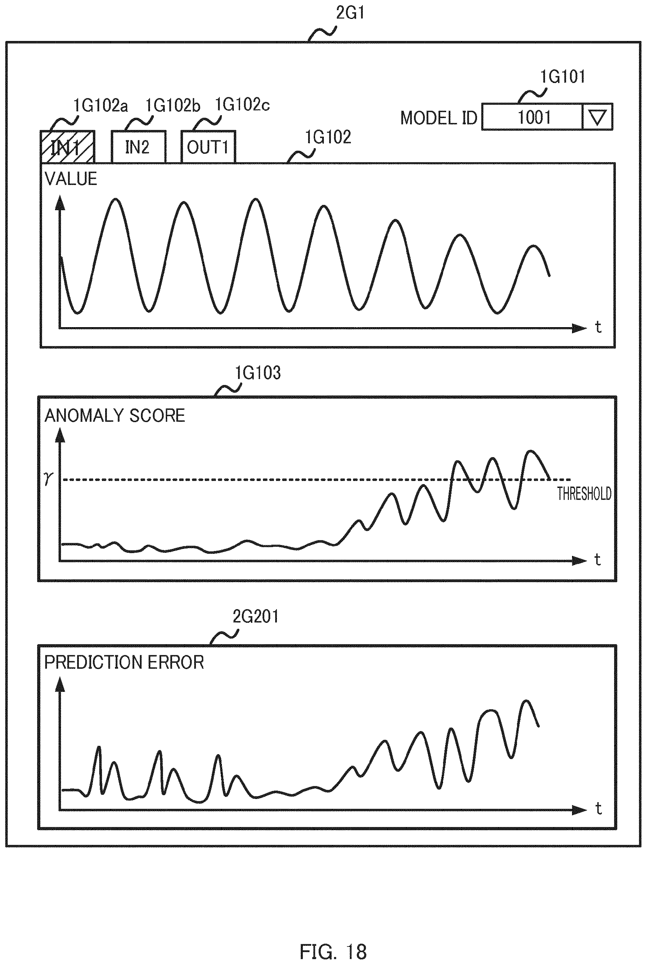

The design of the user interface is basically the same as that of the first embodiment, except that the window size display pane 1G104 is omitted since there is no information on window size. Further, the sum of the prediction error sequence described above may be displayed along with an anomaly score as illustrated in Fig. 18. This enables the user to know a location where an anomaly score is low with the predictive model making a good prediction and a location where an anomaly score is low with the predictive model not making a good prediction.

As described above, anomaly scores are adjusted according to the capability of the predictive model in predicting operational data, and stay approximately the same value during normal operation. Specifically, according to the method described in the first embodiment, an anomaly level is positively evaluated at a location where accurate prediction is possible, and an anomaly level is negatively evaluated at a location where accurate prediction is not possible. Taking a balance in this manner makes anomaly scores stay approximately the same value. Thereby, threshold determination is simplified.

Moreover, since an anomaly score is evaluated using not a single prediction point but a sequence of predicted values at a plurality of points, the anomaly score greatly changes when predictions are off at a location with high prediction capability. This makes clear the difference between operational data under normal operation and that under abnormal operation, that allows the operator to determine the anomaly score threshold easily, and also, reduces erroneous detection.

Further, the operator can check prediction capability with information on window size calculated. As a result, the operator can know whether an anomaly score is high with high prediction capability (whether reliable information is displayed) or whether an anomaly score is high with low prediction capability (whether unreliable information is displayed).

Further, if a window size shows a smaller value than a value determined when a predictive model is generated, the operator can know that it is likely that the monitor target itself has been changed and that a new predictive model needs to be generated.

Further, according to the present embodiment, anomaly level is evaluated using error in the restoration of errors between a predicted value sequence obtained by the predictive model and an observed value sequence. Therefore, even if the predictive model cannot make an accurate prediction, an anomaly score for data obtained under normal operation is kept small, and the anomaly score stays approximately the same. Thereby, threshold determination is simplified.

The descriptions herein provide at least the following. Specifically, the anomaly detection system of the present embodiments may be such that the arithmetic device uses the predictive model and past operational data to perform structured prediction of future time-series data for a predetermined coming time period or an occurrence probability of the time-series data, and calculates the anomaly score based on an accumulated deviation of the operational data acquired from the device from results of the structural prediction.

The structured prediction enables future prediction of data not only at a single point but also at a plurality of points representing a predetermined structure, allowing anomaly scores to be adjusted efficiently.

The anomaly detection system of the present embodiments may be such that in the adjustment processing, the arithmetic device changes a window size for predicting the future time-series data based on a prediction capability of the predictive model so as to adjust the anomaly score such that the anomaly score for the operational data under normal operation falls within the predetermined range.

This allows anomaly scores to be adjusted efficiently according to an appropriate window size based on the prediction capability of the prediction model.

The anomaly detection system of the present embodiments may be such that the arithmetic device uses an encoder-decoder model as the predictive model to output predicted values related to the time-series data in the future.

By the use of the encoder-decoder model as the prediction model, the arithmetic device is able to calculate accurately predicted values for time-series data.

The anomaly detection system of the present embodiments may be such that the arithmetic device uses a generative model as the predictive model to output a sample or a statistic of a probability distribution related to future operational data.

By the use of the generative model such as a variational autoencoder (VAE) as the prediction model, a sample or a statistic of a probability distribution of data in the future can be outputted.

The anomaly detection system of the present embodiments may be such that the arithmetic device predicts the window size using an intermediate representation of a neural network.

The use of an intermediate representation (internal state) of a neural network enables prediction of a window size.

The anomaly detection system of the present embodiments may be such that even if the anomaly score exceeds a predetermined threshold, the arithmetic device exceptionally does not determine that there is an anomaly or a sign of an anomaly if a pattern of the operational data corresponding to the anomaly score matches a pattern known to appear during normal operation.

This can prevent erroneous notification from being given to a monitor or the like regarding data that would be determined as abnormal by a conventional technology when the data is essentially normal.

The anomaly detection system of the present embodiments may be such that the arithmetic device displays, on the output device, not only the information on the at least one of the anomaly score and the result of the detection, but also information on the window size used for the calculation of the anomaly score.

The presentation of the window size information makes it easy for a monitor or the like to see information such as the prediction capability of the predictive model and the behavior of prediction error (an anomaly score) according to the predictive capability.

The anomaly detection system of the present embodiments may be such that as the anomaly score, the arithmetic device uses reconstruction error for prediction error of the predictive model with respect to the operational data under normal operation.

This reduces erroneous detection more efficiently and accurately than the method based on the window size adjustment described above, and clarifies the difference between data under normal operation and data under abnormal operation, facilitating determination of an anomaly score threshold.

The anomaly detection system of the present embodiments may be such that the arithmetic device uses a time-series predictive model or a statistical predictive model as the predictive model.

By the use of the time-series predictive model or the statistical predictive model as the predictive model, the arithmetic device is able to calculate accurately predicted values for time-series data or the like.

The anomaly detection system of the present embodiments may be such that the arithmetic device uses a statistical predictive model to calculate the reconstruction error for the prediction error.

By the use of the statistical predictive model for the calculation of reconstruction error, the arithmetic device is able to calculate accurately predicted values.

The anomaly detection system of the present embodiments may be such that on the output device, the arithmetic device displays the prediction error along with the anomaly score.

The presentation of the prediction error information enables a monitor or the like to see information such as the prediction capability of the predictive model and the behavior of prediction error (an anomaly score) according to the prediction capability.

## Claims

1. An anomaly detection system (1) comprising an arithmetic device (11-13) that is configured to execute:
processing of learning a predictive model that predicts a behavior of a monitoring target device based on operational data on the monitoring target device,
processing of adjusting an anomaly score such that the anomaly score for operational data under normal operation falls within a predetermined range, the anomaly score being based on a deviation of the operational data acquired from the monitoring target device from a prediction result obtained by the predictive model,
processing of detecting an anomaly or a sign of an anomaly based on the adjusted anomaly score, and
processing of displaying information on at least one of the anomaly score and a result of the detection on an output device (1H107);
**characterised in that**, as the anomaly score, the arithmetic device uses a reconstruction error for a prediction error of the predictive model with respect to the operational data under normal operation.

2. The anomaly detection system according to claim 1, wherein
the arithmetic device is configured to use the predictive model and past operational data to perform structured prediction of future time-series data for a predetermined coming time period or an occurrence probability of the time-series data, and is configured to calculate the anomaly score based on an accumulated deviation of the operational data acquired from the monitoring target device from results of the structural prediction.

3. The anomaly detection system according to claim 2, wherein
in the adjustment processing, the arithmetic device is configured to change a time window size for predicting the future time-series data so as to adjust the anomaly score such that the anomaly score for the operational data under normal operation falls within the predetermined range, and
the arithmetic device is configured to predict the time window size using an intermediate representation of a neural network.

4. The anomaly detection system according to claim 2, wherein
the arithmetic device uses an encoder-decoder model as the predictive model to output predicted values related to the future time-series data.

5. The anomaly detection system according to claim 1, wherein
the arithmetic device uses a generative model as the predictive model to output a sample or a statistic of a probability distribution related to future operational data.

6. The anomaly detection system according to claim 2, wherein
even if the anomaly score exceeds a predetermined threshold, the arithmetic device does not determine that there is an anomaly or a sign of an anomaly if a pattern of the operational data corresponding to the anomaly score matches a pattern known to appear during normal operation.

7. The anomaly detection system according to claim 3, wherein
the arithmetic device displays not only the information on at least one of the anomaly score and the result of the detection, but also information on the time window size used for the calculation of the anomaly score on the output device.

8. The anomaly detection system according to claim 1, wherein
the arithmetic device uses a time-series predictive model or a statistical predictive model as the predictive model.

9. The anomaly detection system according to claim 1, wherein
the arithmetic device uses a statistical predictive model to calculate the reconstruction error for the prediction error.

10. The anomaly detection system according to claim 1, wherein
on the output device, the arithmetic device displays the prediction error along with the anomaly score.

11. An anomaly detection method performed by an anomaly detection system according to any one of the previous claims, the method comprising:
learning a predictive model that predicts a behavior of a monitoring target device based on operational data on the monitoring target device;
adjusting an anomaly score such that the anomaly score for operational data under normal operation falls within a predetermined range, the anomaly score being based on a deviation of the operational data acquired from the monitoring target device from a prediction result obtained by the predictive model;
detecting an anomaly or a sign of an anomaly based on the adjusted anomaly score; and
displaying information on at least one of the anomaly score and a result of the detection on an output device;
**characterised in that**, as the anomaly score, the arithmetic device uses reconstruction error for prediction error of the predictive model with respect to the operational data under normal operation.

## Patentansprüche

1. Anomaliedetektionssystem (1), umfassend eine Rechenvorrichtung (11-13), die konfiguriert ist, Folgendes auszuführen:
Verarbeiten des Lernens eines Vorhersagemodells, das ein Verhalten einer Überwachungszielvorrichtung basierend auf Betriebsdaten auf der Überwachungszielvorrichtung vorhersagt,
Verarbeiten des Anpassens einer Anomaliebewertung, so dass die Anomaliebewertung für Betriebsdaten während des Normalbetriebs in einen vorbestimmten Bereich fällt, wobei die Anomaliebewertung auf einer Abweichung der Betriebsdaten basiert, die aus einem Vorhersageergebnis, erhalten durch das Vorhersagemodell, von der Überwachungszielvorrichtung erfasst wurden,
Verarbeiten des Detektierens einer Anomalie oder eines Anomalieanzeichens basierend auf der angepassten Anomaliebewertung und
Verarbeiten des Anzeigens von Informationen über zumindest einem aus der Anomaliebewertung und einem Detektionsergebnis auf einer Ausgabevorrichtung (1H107);
**dadurch gekennzeichnet, dass** die Rechenvorrichtung als Anomaliebewertung einen Rekonstruktionsfehler für einen Vorhersagefehler des Vorhersagemodells in Bezug auf die Betriebsdaten bei Normalbetrieb verwendet.

2. Anomaliedetektionssystem nach Anspruch 1, wobei:
die Rechenvorrichtung konfiguriert ist, das Vorhersagemodell und frühere Betriebsdaten zu verwenden, um eine strukturierte Vorhersage von zukünftigen Zeitseriendaten für einen vorbestimmten bevorstehenden Zeitraum oder die Wahrscheinlichkeit des Auftretens der Zeitseriendaten durchzuführen, und konfiguriert ist, die Anomaliebewertung basierend auf einer kumulierten Abweichung der durch die Überwachungszielvorrichtung aus Ergebnissen der strukturellen Vorhersage erfassten Betriebsdaten zu berechnen.

3. Anomaliedetektionssystem nach Anspruch 2, wobei:
die Rechenvorrichtung bei der Anpassungsverarbeitung konfiguriert ist, eine Zeitfenstergröße für die Vorhersage der zukünftigen Zeitseriendaten so zu verändern, um die Anomaliebewertung so anzupassen, dass die Anomaliebewertung für die Betriebsdaten bei Normalbetrieb in den vorbestimmten Bereich fällt, und
die Rechenvorrichtung konfiguriert ist, die Zeitfenstergröße unter Verwendung einer Zwischendarstellung eines neuronalen Netzes vorherzusagen.

4. Anomaliedetektionssystem nach Anspruch 2, wobei:
die Rechenvorrichtung ein Encoder-Decoder-Modell als Vorhersagemodell verwendet, um vorhergesagte Werte in Bezug auf die zukünftigen Zeitseriendaten auszugeben.

5. Anomaliedetektionssystem nach Anspruch 1, wobei:
die Rechenvorrichtung ein generatives Modell als Vorhersagemodell verwendet, um eine Probe oder eine Statistik einer Wahrscheinlichkeitsverteilung in Bezug auf zukünftige Betriebsdaten auszugeben.

6. Anomaliedetektionssystem nach Anspruch 1, wobei:
die Rechenvorrichtung, sogar wenn die Anomaliebewertung eine vorbestimmte Schwelle überschreitet, nicht bestimmt, dass es eine Anomalie oder ein Anomalieanzeichen gibt, falls ein Muster der Betriebsdaten, die der Anomaliebewertung entsprechen, mit einem Muster übereinstimmt, das bekanntermaßen während des Normalbetriebs auftritt.

7. Anomaliedetektionssystem nach Anspruch 3, wobei.
die Rechenvorrichtung nicht nur die Informationen in Bezug auf zumindest eines von Anomaliebewertung und Detektionsergebnis anzeigt, sondern auch Informationen über die für die Berechnung der Anomaliebewertung auf dem Ausgabegerät verwendete Zeitfenstergröße.

8. Anomaliedetektionssystem nach Anspruch 1, wobei:
die Rechenvorrichtung ein Zeitserien-Vorhersagemodell oder ein statistisches Vorhersagemodell als Vorhersagemodell verwendet.

9. Anomaliedetektionssystem nach Anspruch 1, wobei:
die Rechenvorrichtung ein statistisches Vorhersagemodell verwendet, um den Rekonstruktionsfehler für den Vorhersagefehler zu berechnen.

10. Anomaliedetektionssystem nach Anspruch 1, wobei:
die Rechenvorrichtung den Vorhersagefehler zusammen mit der Anomaliebewertung am Ausgabegerät anzeigt.

11. Anomaliedetektionsverfahren, das von einem Anomaliedetektionssystem nach einem der vorangegangenen Ansprüche durchgeführt wird, wobei das Verfahren Folgendes umfasst:
Lernen eines Vorhersagemodells, das ein Verhalten einer Überwachungszielvorrichtung basierend auf Betriebsdaten auf der Überwachungszielvorrichtung vorhersagt;
Anpassen einer Anomaliebewertung, so dass die Anomaliebewertung für Betriebsdaten bei Normalbetrieb in einen vorbestimmten Bereich fällt, wobei die Anomaliebewertung auf einer Abweichung der durch die Überwachungszielvorrichtung aus einem Vorhersageergebnis, das durch das Vorhersagemodell erhalten wurde, erfassten Betriebsdaten basiert;
Detektieren einer Anomalie oder eines Anomalieanzeichens basierend auf der angepassten Anomaliebewertung; und
Anzeigen von Informationen in Bezug auf zumindest eines von Anomaliebewertung und Detektionsergebnis auf einem Ausgabegerät;
**dadurch gekennzeichnet, dass**:
die Rechenvorrichtung als Anomaliebewertung einen Rekonstruktionsfehler für den Vorhersagefehler des Vorhersagemodells in Bezug auf die Betriebsdaten bei Normalbetrieb verwendet.

## Revendications

1. Système de détection d'anomalies (1) comprenant un dispositif arithmétique (11-13) qui est configuré pour exécuter :
un traitement d'apprentissage d'un modèle prédictif qui prédit le comportement d'un dispositif cible de surveillance d'après des données de fonctionnement sur le dispositif cible de surveillance,
un traitement d'ajustement d'un score d'anomalie de sorte que le score d'anomalie pour des données de fonctionnement dans des conditions normales de fonctionnement se situe dans une plage prédéterminée, le score d'anomalie étant basé sur un écart des données de fonctionnement acquises auprès du dispositif cible de surveillance par rapport à un résultat de prédiction obtenu par le modèle prédictif,
un traitement de détection d'une anomalie ou d'un signe d'anomalie d'après le score d'anomalie ajusté, et
un traitement d'affichage d'informations sur au moins l'un du score d'anomalie et d'un résultat de la détection sur un dispositif de sortie (1H107) ;
**caractérisé en ce que**, comme score d'anomalie, le dispositif arithmétique utilise une erreur de reconstruction d'une erreur de prédiction du modèle prédictif par rapport aux données de fonctionnement dans des conditions normales de fonctionnement.

2. Système de détection d'anomalies selon la revendication 1, dans lequel
le dispositif arithmétique est configuré pour utiliser le modèle prédictif et des données de fonctionnement passées pour réaliser une prédiction structurée de données de séries temporelles futures pour une période de temps à venir prédéterminée ou une probabilité d'occurrence des données de séries temporelles, et est configuré pour calculer le score d'anomalie sur la base d'un écart cumulé des données de fonctionnement acquises auprès du dispositif cible de surveillance par rapport à des résultats de la prédiction structurelle.

3. Système de détection d'anomalies selon la revendication 2, dans lequel
dans le traitement d'ajustement, le dispositif arithmétique est configuré pour modifier la taille d'une fenêtre temporelle pour prédire les données de séries temporelles futures de manière à ajuster le score d'anomalie de sorte que le score d'anomalie pour les données de fonctionnement dans des conditions normales de fonctionnement se situe dans la plage prédéterminée, et
le dispositif arithmétique est configuré pour prédire la taille de la fenêtre temporelle en utilisant une représentation intermédiaire d'un réseau neuronal.

4. Système de détection d'anomalies selon la revendication 2, dans lequel
le dispositif arithmétique utilise un modèle de codeur-décodeur comme modèle prédictif pour produire des valeurs prédites liées aux données de séries temporelles futures.

5. Système de détection d'anomalies selon la revendication 1, dans lequel
le dispositif arithmétique utilise un modèle génératif comme modèle prédictif pour produire un échantillon ou une statistique d'une distribution de probabilités liés à des données de fonctionnement futures.

6. Système de détection d'anomalies selon la revendication 2, dans lequel
même si le score d'anomalie dépasse un seuil prédéterminé, le dispositif arithmétique ne détermine pas qu'il existe une anomalie ou un signe d'anomalie si un motif des données de fonctionnement correspondant au score d'anomalie est identique à un motif connu pour apparaître dans des conditions normales de fonctionnement.

7. Système de détection d'anomalies selon la revendication 3, dans lequel
le dispositif arithmétique affiche non seulement les informations sur au moins l'un du score d'anomalie et du résultat de la détection, mais également des informations sur la taille de la fenêtre temporelle utilisée pour le calcul du score d'anomalie sur le dispositif de sortie.

8. Système de détection d'anomalies selon la revendication 1, dans lequel
le dispositif arithmétique utilise un modèle prédictif de séries temporelles ou un modèle prédictif statistique comme modèle prédictif.

9. Système de détection d'anomalies selon la revendication 1, dans lequel
le dispositif arithmétique utilise un modèle prédictif statistique pour calculer l'erreur de reconstruction de l'erreur de prédiction.

10. Système de détection d'anomalies selon la revendication 1, dans lequel
sur le dispositif de sortie, le dispositif arithmétique affiche l'erreur de prédiction conjointement avec le score d'anomalie.

11. Procédé de détection d'anomalies effectué par un système de détection d'anomalies selon l'une quelconque des revendications précédentes, le procédé comprenant :
l'apprentissage d'un modèle prédictif qui prédit le comportement d'un dispositif cible de surveillance d'après des données de fonctionnement sur le dispositif cible de surveillance ;
l'ajustement d'un score d'anomalie de sorte que le score d'anomalie pour des données de fonctionnement dans des conditions normales de fonctionnement se situe dans une plage prédéterminée, le score d'anomalie étant basé sur un écart des données de fonctionnement acquises auprès du dispositif cible de surveillance par rapport à un résultat de prédiction obtenu par le modèle prédictif ;
la détection d'une anomalie ou d'un signe d'anomalie d'après le score d'anomalie ajusté ; et
l'affichage d'informations sur au moins l'un du score d'anomalie et d'un résultat de la détection sur un dispositif de sortie ;
**caractérisé en ce que**, comme score d'anomalie, le dispositif arithmétique utilise une erreur de reconstruction d'une erreur de prédiction du modèle prédictif par rapport aux données de fonctionnement dans des conditions normales de fonctionnement.
